(19) **Europäisches Patentamt / European Patent Office / Office européen des brevets**

(11) **EP 4 692 174 A1**

(12) **EUROPEAN PATENT APPLICATION**
published in accordance with Art. 153(4) EPC

(43) Date of publication:
**11.02.2026 Bulletin 2026/07**

(21) Application number: **24778834.2**

(22) Date of filing: **19.02.2024**

(51) International Patent Classification (IPC):
**C08J 3/12** (2006.01)    **C08B 15/04** (2006.01)
**C08L 1/02** (2006.01)

(52) Cooperative Patent Classification (CPC):
**C08B 15/04; C08J 3/12; C08L 1/02**

(86) International application number:
**PCT/JP2024/005691**

(87) International publication number:
**WO 2024/202689 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023052520
22.12.2023 JP 2023216511**

(71) Applicant: **Nippon Paper Industries Co., Ltd.
Tokyo 114-0002 (JP)**

(72) Inventors:
- **ONOGI Shinichi
  Tokyo 114-0002 (JP)**
- **MURAMATSU Riichi
  Tokyo 114-0002 (JP)**
- **YASUI Hiroaki
  Tokyo 114-0002 (JP)**
- **ASAI Riku
  Tokyo 114-0002 (JP)**

(74) Representative: **Kuhnen & Wacker
Patent- und Rechtsanwaltsbüro PartG mbB
Prinz-Ludwig-Straße 40A
85354 Freising (DE)**

(54) **POWDER CONTAINING ANIONIC MODIFIED CELLULOSE NANOFIBERS**

(57)    A powder containing an anionically modified cellulose nanofiber having an average fiber diameter of 3 nm to 500 nm, in which the powder has a water content of less than or equal to 20% by mass, an average particle size of less than 45 $\mu$m, and a cumulative 10% diameter (D10) of less than or equal to 10 $\mu$m in a volume-based particle diameter distribution.

## Description

Technical Field

The present invention relates to a powder containing an anionically modified cellulose nanofiber.

Background Art

It is known that when an anionic group such as a carboxy group or a carboxymethyl group is introduced into a cellulose molecular chain and mechanically treated (defibrated), the cellulose molecular chain can be converted into cellulose nanofibers having a nanoscale fiber diameter. Since cellulose nanofibers are lightweight, high in strength, and biodegradable, applications to various fields have been studied.

In general, cellulose nanofibers into which an anionic group was introduced are produced in a state of being stably dispersed in water, and are usually used in various applications as an industrial material or an additive material of food or cosmetics in a state of a produced cellulose nanofiber dispersion with a predetermined concentration. In order to stably maintain the state of the cellulose nanofibers, water of about several tens of times that of the cellulose nanofibers is required. However, since the amount of the water leads to an increase in cost of packaging, storage, transportation, and the like of the cellulose nanofibers, the cellulose nanofibers are dried to form a dried product, and at the time of use, water is added to the dried product to redisperse the dried product, and the product is used as a redispersion liquid.

When an aqueous dispersion of cellulose nanofibers is dried to form a dried solid, hydrogen bonds are formed between fibers of fine cellulose fibers, and thus there is a problem that various properties such as viscosity are not restored to the same levels as before drying even if water is added to the dried solid to redisperse the cellulose nanofibers, and a drying method has been studied (Patent Literature 1 and the like).

Citation List

Patent Literature

Patent Literature 1: WO 2019/189318 A

Summary of Invention

Technical Problem

A dried product of cellulose nanofibers is commercialized through processes such as drying, pulverization, classification, and collection of cellulose nanofibers dispersed in water (wet state). The commercialized cellulose nanofibers are compressed, bagged, and distributed. However, when the cellulose nanofibers are used at a transfer destination, there is a case where a cellulose nanofiber dried product is aggregated and solidified, and there is a problem that the cellulose nanofiber dry product tends to form a lump in a redispersion step. There is a problem that the cellulose nanofiber dried product has high hydrophilicity, and therefore the cellulose nanofibers rapidly absorb water during use and adhere to various places in a process. Further cost reduction has been required along with an increase in demand for dried products of cellulose nanofibers.

Therefore, an object of the present invention is to provide an anionically modified cellulose nanofiber-containing powder that can suppress aggregation and solidification of powders even when compressed and bagged, does not rapidly absorb water, is easy to handle in a process, is excellent in transfer efficiency, and is provided at low transfer cost.

Solution to Problem

As a result of intensive studies to achieve such an object, the present inventors have found that it is extremely effective to form a powder having a specific particle size, and have completed the present invention.

The present invention provides the following.

(1) A powder comprising an anionically modified cellulose nanofiber having an average fiber diameter of 3 nm to 500 nm, wherein the powder has a water content of less than or equal to 20% by mass, an average particle size of less than 45 $\mu$m, and a cumulative 10% diameter (D10) of less than or equal to 10 $\mu$m in a volume-based particle diameter distribution.

(2) The powder comprising an anionically modified cellulose nanofiber according to (1), wherein the powder has an angle of repose of 40 to 55°.

(3) The powder comprising an anionically modified cellulose nanofiber according to (1), wherein the powder has an angle of fall of 20 to 28°.

(4) The powder comprising an anionically modified cellulose nanofiber according to (1), wherein the powder has an angle of difference of 20 to 30°.

(5) The powder according to any one of (1) to (4), wherein the powder has a pH of greater than or equal to 8 when formed into a 1% aqueous dispersion.

Advantageous Effects of Invention

According to the present invention, it is possible to provide an anionically modified cellulose nanofiber-containing powder which can suppress aggregation and solidification of powders even when compressed and bagged, does not rapidly absorb water, is easy to handle in a process, is excellent in transfer efficiency, and is provided at low transfer cost.

Brief Description of Drawings

Fig. 1 is a photograph showing an example of evaluation A in evaluation of initial water absorbability.
Fig. 2 is a photograph showing an example of evaluation B in the evaluation of the initial water absorbability.

Description of Embodiments

Hereinafter, the present invention will be described in detail. In the present invention, "to" includes an end value. That is, "X to Y" includes values X and Y at both ends thereof.

(Anionically Modified Cellulose Nanofiber-Containing Powder)

The present invention provides a powder containing an anionically modified cellulose nanofiber (anionically modified CNF) having an average fiber diameter of 3 nm to 500 nm, in which the powder has a water content of less than or equal to 20% by mass, an average particle size of less than 45 $\mu$m, and a cumulative 10% diameter (D10) in a volume-based particle diameter distribution of less than or equal to 10 $\mu$m.

(Water Content)

From the viewpoint of storability, the anionically modified CNF-containing powder of the present invention has a water content of less than or equal to 20% by mass, and preferably 0 to 15% by mass, more preferably 0 to 10% by mass, and still more preferably 0 to 9.5% by mass. When the water content is excessively greater than the above-described upper limit value, there is a problem that the possibility of spoilage increases. It may be dried to a water content of 0% (bone dry).

(Average Particle Size)

The anionically modified CNF-containing powder of the present invention has an average particle size of less than 45 $\mu$m, preferably greater than or equal to 5 $\mu$m and less than 20 $\mu$m from the viewpoint of transfer efficiency. In addition, if the average particle size is much greater than the above upper limit value, there is a problem that the powder is bulky and the transfer efficiency decreases. In addition, if the average particle size is much greater than the above upper limit value, there is a possibility that the redispersibility during weak stirring (for example, 1000 rpm) is poor. Here, the average particle size (D50) is a particle size including 50% of a cumulative value from the minimum value in a volume-based particle size distribution. The particle size distribution can be measured using a laser diffraction/scattering type particle size distribution meter.

(Cumulative 10% Diameter)

From the viewpoint of the filling rate, the anionically modified CNF-containing powder of the present invention has a cumulative 10% diameter (D10) of less than or equal to 10 $\mu$m, more preferably less than or equal to 8 $\mu$m, still more preferably less than or equal to 5 $\mu$m. If D10 is much greater than the above upper limit value, there is a problem that voids increase and the filling rate decreases. Further, D10 is preferably greater than or equal to 0.1 $\mu$m. Here, the cumulative 10% diameter (D10) is a particle size including 10% of the cumulative value from the minimum value in the volume-based particle size distribution. The particle size distribution can be measured using a laser diffraction/scattering type particle size distribution meter.

(Angle of Repose)

The anionically modified CNF-containing powder of the present invention has an angle of repose of preferably 40 to 55°, more preferably 42 to 52°, from the viewpoint of the handleability and the workability. If the angle of repose is much greater than the above range, deposition is likely to occur in a hopper, and if the angle of repose is much less than the range, the powder does not stop from a feeder outlet or the like. The angle of repose can be measured using a powder property testing apparatus.

(Angle of Fall)

The anionically modified CNF-containing powder of the present invention has an angle of fall of preferably 20 to 28°, more preferably 22 to 25°, from the viewpoint of the handleability and the workability. If the angle of fall is much greater than the above range, a large impact is required to break the volume of the powder, and if the angle of fall is much less than the range, the powder does not stop from a feeder outlet or the like. The angle of fall can be measured using a powder property testing apparatus.

(Angle of Difference)

The anionically modified CNF-containing powder of the present invention has an angle of difference of preferably 20 to 30°, more preferably 22 to 28°, from the viewpoint of the handleability and the workability. If the angle of difference is much greater than the above range, the jetting property becomes high and the powder is likely to scatter, and if the angle of difference is much less than the range, a large force is required for discharge, and it becomes difficult to control the discharge amount. The angle of difference can be obtained by the following equation from the angle of repose and the angle of fall measured using a powder property testing apparatus.

The angle of difference = The angle of repose - the angle of fall

(Circularity)

The lower limit of the circularity of the anionically modified CNF-containing powder of the present invention is preferably greater than or equal to 0.5, more preferably greater than or equal to 0.6, and still more preferably greater than or equal to 0.7 from the viewpoint of workability at the time of packaging. The upper limit of the circularity is preferably less than or equal to 1.0, and more preferably less than or equal to **0.9.** The upper limit of the circularity is 1. If the circularity is much lower than the above lower limit, aggregation is likely to occur at the time of packing. The circularity can be measured using, for example, a particle image analyzer (manufactured by Marvern Panalytical Ltd., Morphologi G3).

(pH after Redispersion)

From the viewpoint of improving the redispersibility during weak stirring (for example, 1000 rpm), the anionically modified CNF-containing powder of the present invention preferably has a pH of greater than or equal to 7.0, more preferably has a pH of greater than or equal to 8.0 when formed into a 1% aqueous dispersion. The upper limit of the pH is preferably less than or equal to 10.

(Anionically Modified Cellulose Nanofiber)

In the present invention, the anionically modified cellulose nanofiber (anionically modified CNF) is a fine fiber having an average fiber diameter (fiber width) of 3 to 500 nm and an aspect ratio of 100 or more, and can be obtained by defibrating anionically modified cellulose.

(Cellulose Raw Material)

Examples of a cellulose raw material for producing the anionically modified cellulose include materials derived from plant materials (for example, wood, bamboo, hemp, jute, kenaf, farm wastes, cloth, and pulp (softwood unbleached kraft pulp (NUKP), softwood bleached kraft pulp (NBKP), hardwood unbleached kraft pulp (LUKP), hardwood bleached kraft pulp (LBKP), softwood unbleached sulfite pulp (NUSP), softwood bleached sulfite pulp (NBSP) thermomechanical pulp (TMP), recycled pulp, waste paper, and the like), animal materials (for example, Ascidians), algae, microorganisms (for example, acetic acid bacteria (acetobacter)), microbial products, and the like, and any of them can be used. Cellulose fibers derived from plants or microorganisms are preferable, and cellulose fibers derived from plants are more preferable.

(Anionic Modification)

In the present invention, anionic modification refers to introduction of an anionic group into cellulose, and specifically refers to introduction of an anionic group into a pyranose ring of cellulose by carboxylation (oxidation) or a substitution reaction. In the present invention, the carboxylation (oxidation) reaction refers to a reaction in which a hydroxyl group of the pyranose ring is directly oxidized to a carboxy group. In the present invention, the substitution reaction refers to a reaction in which the anionic group is introduced into the pyranose ring by the substitution reaction other than the carboxylation (oxidation).

Examples of the anionic modification include carboxylation (oxidation), carboxymethylation, and esterification. Among them, carboxylation (oxidation), carboxymethylation, and phosphoric acid esterification are more preferable, and carboxylation (oxidation) is particularly preferable.

(Carboxylation)

In the present invention, when carboxylated (oxidized) cellulose is used as the anionically modified cellulose, the carboxylated cellulose (also referred to as oxidized cellulose) can be obtained by carboxylating (oxidizing) the cellulose raw material by a known method. Although not particularly limited, in the carboxylation, the amount of the carboxy group is preferably adjusted to 0.6 to 2.0 mmol/g, more preferably 1.0 mmol/g to 2.0 mmol/g based on the bone dry mass of the anionically modified cellulose nanofiber.

An example of the carboxylation (oxidation) method is a method of oxidizing the cellulose raw material in water using an oxidizing agent in the presence of an N-oxyl compound and a compound selected from the group consisting of a bromide, an iodide, or a mixture thereof. By this oxidation reaction, a primary hydroxyl group at the C6-position of a glucopyranose ring on a cellulose surface is selectively oxidized, and a cellulose fiber containing an aldehyde group and a carboxy group ($-COOH$) or a carboxylate group ($-COO^-$) on the surface can be obtained. The concentration of the cellulose during the reaction is not particularly limited, but is preferably less than or equal to 5% by mass.

The N-oxyl compound refers to a compound capable of generating a nitroxy radical. As the N-oxyl compound, any compound can be used as long as it is a compound that promotes an intended oxidation reaction. Examples of the N-oxyl compound include 2,2,6,6-tetramethylpiperidine-1-oxy radical (TEMPO) and derivatives thereof (for example, 4-hydroxy TEMPO).

The amount of the N-oxyl compound used is not particularly limited as long as it is a catalytic amount capable of oxidizing cellulose as the raw material. For example, based on 1 g of bone dry cellulose, 0.01 to 10 mmol is preferable, 0.01 to 1 mmol is more preferable, and 0.05 to 0.5 mmol is still more preferable. In addition, it is preferably about 0.1 to 4 mmol/L based on the reaction system.

The bromide is a compound containing bromine, and examples thereof include an alkali metal bromide that can be dissociated and ionized in water. The iodide is a compound containing iodine, and examples thereof include an alkali metal iodide. The amount of the bromide or iodide to be used can be selected as long as the oxidation reaction can be promoted. The total amount of the bromide and the iodide is, for example, preferably 0.1 to 100 mmol, more preferably 0.1 to 10 mmol, and still more preferably 0.5 to 5 mmol, based on 1 g of bone dry cellulose.

As the oxidizing agent, a known oxidizing agent can be used, and for example, a halogen, a hypohalous acid, a halous acid, a perhalic acid or a salt thereof, a halogen oxide, a peroxide, or the like can be used. Among them, sodium hypochlorite which is inexpensive and has a low environmental load is preferable. A suitable amount of the oxidizing agent to be used is, for example, preferably 0.5 to 500 mmol, more preferably 0.5 to 50 mmol, still more preferably 1 to 25 mmol, and most preferably 3 to 10 mmol, based on 1 g of bone dry cellulose. In addition, for example, an amount of 1 to 40 mol is preferable based on 1 mol of the N-oxyl compound.

In the step of oxidizing the cellulose, the reaction can efficiently proceed even under relatively mild conditions. Therefore, the reaction temperature is preferably 4 to 40°C, and may be room temperature of about 15 to 30°C. Since a carboxy group is generated in the cellulose as the reaction proceeds, a decrease in pH of a reaction solution is observed. In order to efficiently progress the oxidation reaction, it is preferable to add an alkaline solution such as an aqueous sodium hydroxide solution to maintain the pH of the reaction solution at about 8 to 12, preferably about 10 to 11. A reaction medium is preferably water because it is easy to handle and side reactions hardly occur.

The reaction time in the oxidation reaction can be appropriately set according to the degree of progress of oxidation, and is usually about 0.5 to 6 hours, for example, about 0.5 to 4 hours.

The oxidation reaction may be performed in two stages. For example, by oxidizing the oxidized cellulose obtained by filtration after completion of the first-stage reaction again under the same or different reaction conditions, it is possible to efficiently oxidize the oxidized cellulose without being inhibited by salt produced as a by-product in the first-stage reaction.

Another example of the carboxylation (oxidation) method is a method of oxidizing the cellulose raw material by bringing a gas containing ozone into contact with the cellulose raw material. By this oxidation reaction, hydroxyl groups at least at the 2- and 6-positions of the glucopyranose ring are oxidized, and the cellulose chain is decomposed. The concentration of the ozone in the gas containing the ozone is preferably 50 to 250 $g/m^3$, and more preferably 50 to 220 $g/m^3$. The amount of the ozone added to the cellulose raw material is preferably 0.1 to 30 parts by mass and more preferably 5 to 30 parts by mass when the solid content of the cellulose raw material is 100 parts by mass. The ozone treatment temperature is preferably 0 to 50°C, and more preferably 20 to 50°C. The ozone treatment time is not particularly limited, but is about 1 to 360 minutes, and preferably about 30 to 360 minutes. When the ozone treatment conditions are within these ranges, the cellulose can be prevented from being excessively oxidized and decomposed, and the yield of the oxidized cellulose is improved. After the ozone treatment is performed, additional oxidation treatment may be performed using an oxidizing agent. The oxidizing agent used in the additional oxidation treatment is not particularly limited, and examples thereof include chlorinebased compounds such as chlorine dioxide and sodium chlorite, oxygen, hydrogen peroxide, persulfuric acid, and peracetic acid. For example, the additional oxidation treatment can be performed by dissolving these oxidizing agents in a polar organic solvent such as water or alcohol to prepare an oxidizing agent solution, and immersing the cellulose raw material in the solution.

The amount of the carboxy group of the oxidized cellulose can be adjusted by controlling the reaction conditions such as the amount of the oxidizing agent to be added and the reaction time.

(Carboxymethylation)

In the present invention, when carboxymethylated cellulose is used as the anionically modified cellulose, the carboxymethylated cellulose may be obtained by carboxymethylating the cellulose raw material by a known method, or a commercially available product may be used. In any case, cellulose with a degree of substitution with carboxymethyl group per anhydroglucose unit of 0.01 to 0.50 is preferable. As an example of a method for producing such carboxymethylated cellulose, the following method can be mentioned. Cellulose is used as a starting material, and water and/or a lower alcohol, specifically water, methanol, ethanol, N-propyl alcohol, isopropyl alcohol, N-butanol, isobutanol, tertiary butanol, or the like alone or a mixed medium containing two or more kinds thereof, are used in an amount of 3 to 20 times the mass as a solvent. When the lower alcohol is mixed, the mixing ratio of the lower alcohol is 60 to 95% by mass. As a mercerizing agent, alkali metal hydroxide, specifically sodium hydroxide and potassium hydroxide, is used in an amount of 0.5 to 20 times the mole per anhydroglucose residue in the starting material. The starting material, the solvent, and the mercerizing agent are mixed, and mercerizing treatment is performed at a reaction temperature of 0 to 70°C, preferably 10 to 60°C, for a reaction time of 15 minutes to 8 hours, preferably 30 minutes to 7 hours. Thereafter, a carboxymethylating agent is added in a molar ratio of 0.05 to 10.0 times per glucose residue, and an etherification reaction is performed at a reaction temperature of 30 to 90°C, preferably 40 to 80°C, for a reaction time of 30 minutes to 10 hours, preferably 1 hour to 4 hours.

(Crystallinity of Cellulose I Type)

The degree of crystallinity of cellulose I type in the carboxymethylated cellulose is preferably higher than or equal to 50%, and more preferably higher than or equal to 60%. The degree of crystallinity of cellulose I type in the carboxymethylated cellulose can be controlled based on the concentration of the mercerizing agent at the time of production, the temperature at the time of treatment, and the degree of carboxymethylation. Since alkali with a high concentration is used in mercerization and carboxymethylation, type I crystals of the cellulose are easily converted into type II, but for example, desired crystallinity can be maintained by adjusting the amount of alkali (mercerizing agent) to be used to adjust the degree of conversion. The upper limit of the degree of crystallinity of cellulose I type is not particularly limited. In practice, the upper limit is considered to be about 90%. The degree of crystallinity of cellulose I type in the carboxymethylated cellulose and the degree of crystallinity of cellulose I type in carboxymethylated CNFs obtained by defibrating the carboxymethylated cellulose are usually the same.

In the present specification, the "carboxymethylated cellulose", which is a type of anionically modified cellulose used for preparation of anionically modified CNFs, refers to cellulose that maintains at least a part of its fibrous shape even when dispersed in water. Therefore, it is distinguished from carboxymethyl cellulose, which is a type of water-soluble polymer described later. When an aqueous dispersion of the "carboxymethylated cellulose" is observed with an electron microscope, a fibrous substance can be observed. On the other hand, when an aqueous dispersion of carboxymethyl cellulose, which is a type of water-soluble polymer, is observed, no fibrous substance is observed. In addition, a peak of cellulose I type crystals can be observed in the "carboxymethylated cellulose" as measured by X-ray diffraction, but a cellulose I type crystal is not observed in carboxymethyl cellulose as a water-soluble polymer.

(Esterification)

In the present invention, when esterified cellulose is used as the anionically modified cellulose, the esterified cellulose is obtained by a method in which a powder or an aqueous solution of a phosphoric acid-based compound A is mixed with the cellulose raw material, or a method in which an aqueous solution of the phosphoric acid-based compound A is added to a slurry of the cellulose raw material.

Examples of the phosphoric acid-based compound A include phosphoric acid, polyphosphoric acid, phosphorous acid, hypophosphorous acid, phosphonic acid, polyphosphonic acid, and esters thereof. These may be in the form of salts. Among them, a compound containing a phosphate group is preferable because it is low in cost and easy to handle, and a phosphate group can be introduced into cellulose of pulp fibers to improve defibration efficiency. Examples of the compound containing a phosphate group include phosphoric acid, sodium dihydrogen phosphate, disodium hydrogen phosphate, trisodium phosphate, sodium phosphite, potassium phosphite, sodium hypophosphite, potassium hypophosphite, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, and ammonium metaphosphate. These can be used singly or in combination of two or more kinds thereof. Among them, phosphoric acid, a sodium salt of phosphoric acid, a potassium salt of phosphoric acid, and an ammonium salt of phosphoric acid are more preferable from the viewpoint of high efficiency of phosphate group introduction, easy defibration in the following defibration step, and easy industrial application. In particular, sodium dihydrogen phosphate and disodium hydrogen phosphate are preferable. In addition, the phosphoric acid-based compound A is preferably used as an aqueous solution because the uniformity of the reaction is improved and the efficiency of phosphate group introduction is increased. The pH of the aqueous solution of the phosphoric acid-based compound A is preferably less than or equal to 7 because the efficiency of phosphate group introduction is increased, but the pH is preferably 3 to 7 from the viewpoint of suppressing hydrolysis of pulp fibers.

Examples of the method for producing the phosphate-esterified cellulose include the following method. The phosphoric acid-based compound A is added to a dispersion of a cellulose raw material having a solid content concentration of 0.1 to 10% by mass with stirring to introduce a phosphate group into the cellulose. When the amount of the cellulose raw material is 100 parts by mass, the added amount of the phosphoric acid-based compound A is preferably 0.2 to 500 parts by mass and more preferably 1 to 400 parts by mass in terms of the phosphorus element amount. When the proportion of the phosphoric acid-based compound A is greater than or equal to the above-mentioned lower limit value, the yield of fine cellulose fibers can be further improved. However, when the upper limit value is exceeded, the effect of improving the yield reaches a plateau, which is not preferable from the viewpoint of cost.

In this case, in addition to the cellulose raw material and the phosphoric acid-based compound A, a powder or an aqueous solution of a compound B other than the cellulose raw material and the phosphoric acid-based compound A may be mixed. The compound B is not particularly limited, but a nitrogen-containing compound exhibiting basicity is preferable. Here, the "basicity" is defined as that the aqueous solution exhibits a peach to red color in the presence of a phenolphthalein indicator, or that the pH of the aqueous solution is greater than 7. The nitrogen-containing compound exhibiting basicity used in the present invention is not particularly limited as long as the effects of the present invention are exhibited, but a compound containing an amino group is preferable. Examples thereof include, but are not particularly limited to, urea, methylamine, ethylamine, trimethylamine, triethylamine, monoethanolamine, diethanolamine, triethanolamine, pyridine, ethylenediamine, hexamethylenediamine, and the like. Among them, urea which is easy to handle at low cost is preferable. The amount of the compound B added is preferably 2 to 1000 parts by mass, and more preferably 100 to 700 parts by mass based on 100 parts by mass of the solid content of the cellulose raw material. The reaction temperature is preferably 0 to 95°C, more preferably 30 to 90°C. The reaction time is not particularly limited, but is about 1 to 600 minutes, and more preferably 30 to 480 minutes. When the conditions for the esterification reaction are within these ranges, it is possible to prevent cellulose from being excessively esterified and easily dissolved, and the yield of phosphate-esterified cellulose is improved. After the obtained phosphate-esterified cellulose suspension is dehydrated, heat treatment is preferably performed at 100 to 170°C from the viewpoint of suppressing hydrolysis of the cellulose. Furthermore, it is preferable to heat it at 130°C or lower, preferably 110°C or lower while water is contained in it in the heat treatment, remove water, and then perform the heat treatment at 100 to 170°C.

The degree of substitution with phosphate group per glucose unit in the phosphate-esterified cellulose is preferably 0.001 to 0.40. By introducing a phosphate group substituent into cellulose, cellulose particles electrically repel each other. Therefore, cellulose into which a phosphate group has been introduced can be easily defibrated. When the degree of substitution with phosphate group per glucose unit is less than 0.001, the defibration cannot be sufficiently performed. On the other hand, when the degree of substitution with phosphate group per glucose unit is greater than 0.40, the cellulose is swollen or dissolved, so that fine cellulose fibers may not be obtained. In order to efficiently perform the defibration, it is preferable that the phosphate-esterified cellulose raw material obtained as described above be boiled and then washed with cold water. The modification by the esterification is modification by a substitution reaction. The degree of substitution in the esterified cellulose and the degree of substitution when the esterified cellulose is miniaturized are usually the same.

In other words, the phosphate-esterified cellulose is cellulose into which a phosphorus oxoacid group or a substituent derived from the phosphorus oxoacid group (it may be simply referred to as a "phosphorus oxoacid group".) as an anionic group is introduced. Here, the phosphorus oxoacid group is, for example, a divalent functional group obtained by removing a hydroxy group from phosphoric acid, and is specifically a group represented by $-PO_3H_2$. The substituent derived from the phosphorus oxoacid group includes a substituent such as a salt of the phosphorus oxoacid group or a phosphorus oxoacid ester group. The substituent derived from the phosphorus oxoacid group may be contained in the cellulose nanofiber as a group (for example, a pyrophosphate group) in which a phosphate group is condensed. The phosphorus oxoacid group may be, for example, a phosphorous acid group (phosphonic acid group), and the substituent derived from the phosphorus oxoacid group may be a salt of the phosphorous acid group.

The amount of the phosphorus oxoacid group, such as a phosphoric acid group or a phosphorous acid group, introduced into the phosphate-esterified cellulose is not particularly limited. In the phosphoric acid esterification, the amount of the phosphorus oxoacid group is preferably adjusted to 0.5 to 5 mmol/g, more preferably 0.5 to 2.5 mmol/g based on the bone dry mass of the anionically modified cellulose nanofiber.

(Defibration)

A device used for defibrating the anionically modified cellulose is not particularly limited, but devices such as a high-speed rotation type, a colloid mill type, a high-pressure type, a roll mill type, and an ultrasonic type can be used. In the defibration, it is preferable to apply a strong shearing force to an aqueous dispersion of the anionically modified cellulose. In particular, for efficient defibration, it is preferable to use a wet high-pressure or ultrahigh-pressure homogenizer capable of applying a pressure higher than or equal to 50 MPa to the aqueous dispersion and applying a strong shearing force. The pressure is more preferably higher than or equal to 100 MPa, still more preferably higher than or equal to 140 MPa. In addition, before the defibration and dispersion treatment by the high-pressure homogenizer, the aqueous dispersion may be subjected to preliminary treatment using a known mixing, stirring, emulsification, and dispersion apparatus such as a high-speed shearing mixer as necessary.

(Dispersant)

The anionically modified cellulose nanofiber-containing powder of the present invention may contain a dispersant from the viewpoint of improving the redispersibility. Examples of the dispersant include a water-soluble polymer and a surfactant, and when the water-soluble polymer is used, it is preferable to use a water-soluble polymer in order to cover a portion having a low charge density on the surface of the anionically modified cellulose nanofiber, suppress the formation of hydrogen bonds, and prevent aggregation of cellulose nanofibers during drying.

(Water-Soluble Polymer)

In the present invention, examples of the water-soluble polymer include cellulose derivatives (carboxymethyl cellulose, methyl cellulose, hydroxypropyl cellulose, ethyl cellulose), xanthan gum, xyloglucan, dextrin, dextran, carrageenan, locust bean gum, alginic acid, alginate, pullulan, starch, potato starch, arrowroot powder, processed starch (cationized starch, phosphorylated starch, phosphate-crosslinked starch, phosphate-mono-esterified phosphate-crosslinked starch, hydroxypropyl starch, hydroxypropylated phosphate-crosslinked starch, acetylated adipic acid crosslinked starch, acetylated phosphate-crosslinked starch, acetylated oxidized starch, sodium octenylsuccinate starch, acetic acid starch, oxidized starch), corn starch, gum arabic, gellan gum, polydextrose, pectin, chitin, water-soluble chitin, chitosan, casein, albumin, soybean protein lysate, peptone, polyvinyl alcohol, polyacrylamide, sodium polyacrylate, polyvinyl pyrrolidone, polyvinyl acetate, polyamino acid, polylactic acid, polymalic acid, polyglycerin, latex, rosin-based sizing agents, petroleum resin-based sizing agents, urea resins, melamine resins, epoxy resins, polyamide resins, polyamide-polyamine resins, polyethyleneimine, polyamine, plant gum, polyethylene oxide, hydrophilic crosslinked polymers, polyacrylic acid salts, starch polyacrylic acid copolymers, tamarind gum, guar gum, colloidal silica, and mixtures of one or more thereof. Among them, the cellulose derivative is preferable from the viewpoint of compatibility with the anionically modified cellulose nanofiber, and carboxymethyl cellulose and a salt thereof are particularly preferable. It is considered that a water-soluble polymer such as carboxymethyl cellulose and a salt thereof penetrates between anionically modified cellulose nanofibers, and widens a distance between CNFs to improve redispersibility.

When carboxymethyl cellulose or a salt thereof is used as the water-soluble polymer, carboxymethyl cellulose having a degree of substitution with carboxymethyl group per anhydroglucose unit of 0.55 to 1.6 is preferably used, carboxymethyl cellulose having a degree of substitution with carboxymethyl group of 0.55 to 1.1 is more preferably used, and carboxymethyl cellulose having a degree of substitution with carboxymethyl group of 0.65 to 1.1 is still more preferably used. In addition, carboxymethyl cellulose having a longer molecule (higher viscosity) has a higher effect of widening a distance between CNFs, and thus is preferable, and the B-type viscosity at 25°C and 600 rpm in a 1% by mass of aqueous solution of the carboxymethyl cellulose is preferably 3 to 14000 mPa·s, more preferably 7 to 14000 mPa·s, and still more preferably 1000 to 8000 mPa·s. The "carboxymethyl cellulose or a salt thereof" as used herein is completely dissolved in water, and thus is distinguished from the carboxymethylated cellulose having a fiber shape that can be confirmed in water.

In the present invention, when the anionically modified cellulose nanofiber-containing powder contains a dispersant, the blending ratio of the anionically modified CNF (absolute dry solid content) and the dispersant is preferably 2:8 to 8:2, and more preferably 5:5 to 7:3 from the viewpoint of obtaining the effect of improving the redispersibility. If the blending ratio of the dispersant is excessively greater than the above-described upper limit value, problems such as degradation of viscosity characteristics such as thixotropy, which is a characteristic of the anionically modified CNF and a decrease in dispersion stability may occur. If the blending ratio of the dispersant is much less than the lower limit, sufficient redispersibility cannot be obtained.

(Method for Producing Powder)

A method for producing the anionically modified CNF-containing powder of the present invention is not particularly limited. Examples of the method include a method in which an aqueous suspension containing the anionically modified CNF and a dispersant blended as necessary is dehydrated and dried to obtain a dry solid, and then pulverized by a pulverizer or the like, and the obtained pulverized product is classified as necessary and collected to obtain a powder, and a method in which the aqueous suspension is spray-dried to simultaneously perform dehydration, drying, and powderization, classified as necessary, and collected to obtain a powder. Examples of a method for the spraying include atomizers, one-fluid nozzles, and two-fluid nozzles.

It is preferable to adjust the pH to 7 to 12, more preferably to 7.5 to 11 using an alkali such as sodium hydroxide, sodium hydrogen carbonate, or potassium hydroxide before dehydrating and drying the aqueous suspension containing the anionically modified CNF from the viewpoint of improving the redispersibility.

The treatment conditions for the spray drying vary depending on the spray method, and thus cannot be unconditionally described, but for example, a method can be performed in which treatment conditions such as the concentration, viscosity, spray pressure, temperature, dry air amount, and liquid feeding amount of a liquid to be dried are adjusted, a calibration curve indicating the relationship between the treatment conditions and particle sizes is created, and the treatment conditions are appropriately determined based on the calibration curve so that a desired average particle size is obtained.

The method for dehydrating and drying the aqueous suspension containing the anionically modified CNF may be any conventionally known method, and examples thereof include spray drying, freeze drying, squeezing, air drying, hot air drying, and vacuum drying. Specific examples of a drying device to be used include the following. That is, a drying device such as a continuous tunnel drying device, a band drying device, a vertical drying device, a vertical turbo drying device, a multistage disk drying device, a ventilation drying device, a rotary drying device, an airflow drying device, a spray dryer drying device, a spray drying device, a cylindrical drying device, a drum drying device, a vacuum belt drying device, a screw conveyor drying device, a rotary drying device with a heating tube, a vibration transport drying device, or a fluidized bed drying device, a rotary box type drying device, a ventilation drying device, a vacuum box type drying device, a stirring drying device, a shelf drying device, or a freeze drying device can be used alone or in combination of two or more. Among them, a drum drying device and a belt drying device are preferably used, and from the viewpoint of energy efficiency, a drum drying device that uniformly and directly supplies heat energy to an object to be dried is more preferably used.

The method for pulverizing the anionically modified CNF-containing dry solid to obtain a pulverized product is not particularly limited. For example, a pulverized product can be obtained by pulverizing the anionically modified CNF-containing dry solid with a pulverizer. Examples of the pulverizer are a cutting type mill: a mesh mill (manufactured by Horai Co., Ltd.), Atoms (manufactured by YAMAMOTO HYAKUMA MFG. CO., LTD.), a knife mill (manufactured by Pallmann Maschinenfabrik GmbH & Co. KG), a cutter mill (manufactured by TOKYO ATOMIZER M.F.G. CO., LTD.), a CS cutter (manufactured by Mitsui Mining Co., Ltd.), a rotary cutter mill (manufactured by NARA MACHINERY CO., LTD.), a turbo cutter (manufactured by Freund Corporation), a pulp crusher (manufactured by ZUIKO CORPORATION), a shredder (manufactured by Shinko Pantech Co., Ltd.), a hammer-type mill: a jaw crusher (manufactured by Makino Corporation), a hammer crusher (manufactured by Makino MFG. Co., Ltd.), an impact type mill: a pulverizer (manufactured by Hosokawa Micron Corporation), a fine impact mill (manufactured by Hosokawa Micron Corporation), a super micron mill (manufactured by Hosokawa Micron Corporation), Innomizer (manufactured by Hosokawa Micron Corporation), a fine mill (Nippon Pneumatic Mfg. Co., Ltd.), a CUM type centrifugal mill (manufactured by Mitsui Mining Co., Ltd.), an exceed mill (manufactured by Makino MFG. Co., Ltd.), Ultraplex (manufactured by Makino MFG. Co., Ltd.), Contraplex (manufactured by Makino MFG. Co., Ltd.), Coloplex (manufactured by Makino MFG. Co., Ltd.), a sample mill (manufactured by Seishin Enterprise Co., Ltd.), a bantam mill (manufactured by Seishin Enterprise Co., Ltd.), an atomizer (manufactured by Seishin Enterprise Co., Ltd.), a tornado mill (Nikkiso Co., Ltd.), a NEA mill (DALTON CORPORATION), an HT type fine pulverizer (manufactured by Horai Co., Ltd.), a free pulverizer (manufactured by NARA MACHINERY CO., LTD.), a new costomizer (manufactured by NARA MACHINERY CO., LTD.), a turbo mill (manufactured by Freund Corporation), a gather mill (manufactured by Nishimura Machine Works Co. Ltd.), a super powder mill (manufactured by Nishimura Machine Works Co. Ltd.), a blade mill (manufactured by NISSHIN ENGINEERING INC.), a super rotor (manufactured by NISSHIN ENGINEERING INC.), an Npa crusher (manufactured by Sansho Industry Co., Ltd.), a Willet pulverizer (manufactured by Sanki Seisakusho Co., Ltd.), a pulp pulverizer (manufactured by ZUIKO CORPORATION), a Jacobson fine pulverizer (manufactured by Shinko Pantech Co., Ltd.), a universal mill (manufactured by TOKUJU CORPORATION), an atomizer (manufactured by TOKYO ATOMIZER M.F.G. CO., LTD.), Millstardom (manufactured by Tokyo Atomizer M.F.G. Co., Ltd.), an airflow type mill: a stream mill (manufactured by NIPPON COKE & ENGINEERING CO., LTD.), a CGS type jet mill (manufactured by Mitsui Mining Co., Ltd.), Micron Jet (manufactured by Hosokawa Micron Corporation), a counter jet mill (manufactured by Hosokawa Micron Corporation), a cross jet mill (manufactured by Kurimoto, Ltd.), a supersonic Jet Mill (manufactured by Nippon Pneumatic Mfg. Co., Ltd.), Current Jet (manufactured by NISSHIN ENGINEERING INC.), a jet mill (manufactured by Sansho Industry Co., Ltd.), Ebara Jet Micronizer (manufactured by EBARA CORPORATION), Ebara Triad Jet (manufactured by EBARA CORPORATION), a selenium mirror (manufactured by MASUKO SANGYO CO., LTD.), New Microcyclomat (manufactured by Masuno Seisakusho Ltd.), Cryptron (manufactured by Kawasaki Heavy Industries Ltd.), a disc type mill: a vibrating disc mill (manufactured by Retch GmbH), Centricutter (manufactured by NIPPON COKE & ENGINEERING CO., LTD.), a turbo disc mill (manufactured by Freund-Turbo Corporation), a mortar type high-speed pulverizer (manufactured by Makino MFG. Co., Ltd.), a vertical roller mill: a vertical roller mill (manufactured by Scenion Inc.), a vertical roller mill (manufactured by Schaeffler Japan Co., Ltd.), a roller mill (manufactured by Kotobuki Engineering & Manufacturing Co., Ltd.), VX Mill (manufactured by Kurimoto, Ltd.), KVM Vertical Mill (manufactured by EARTHTECHNICA Co., Ltd.), and an IS mill (manufactured by IHI Plant Engineering Corporation).

Treatment conditions of these pulverizers cannot be uniformly determined because the pulverization principles are different, but for example, a method can be performed in which treatment conditions affecting the pulverization treatment, such as the screen diameter at the outlet of the pulverizer and the rotation speed of a classification rotor, are adjusted, a calibration curve indicating the relationship between the treatment conditions and particle sizes is created, and the treatment conditions are appropriately determined based on the calibration curve so that a desired average particle size is obtained.

The pulverized product containing the anionically modified CNF may be classified as necessary. The classification can be performed using a classification apparatus provided with or attached to a pulverizer.

The type of an apparatus used for collecting the pulverized product containing the anionically modified CNF and a granulated product obtained by spray drying is not particularly limited. Examples of the collection device include a cyclone and a bag filter.

The anionically modified CNF-containing powder may be classified after the collection.

Since the anionically modified CNF-containing powder of the present invention has an average particle size of less than 45 $\mu$m and a cumulative 10% diameter (D10) of less than or equal to 10 $\mu$m, can suppress aggregation and solidification of powders even when compressed and bagged, does not rapidly absorb water, is easy to handle in the process, has a high loose bulk density and a high packed bulk density, is excellent in transfer efficiency, and is provided at low transfer cost. The anionically modified CNF-containing powder of the present invention is particularly excellent in redispersibility during weak stirring at about 1000 rpm.

Examples

Hereinafter, the present invention will be described in more detail with reference to Examples, but the present invention is not limited thereto.

(Average Fiber Diameter and Average Fiber Length of CNFs)

A suspension in which the powder was redispersed in water was diluted, 200 randomly selected fibers are analyzed using an atomic force microscope (AFM), and averages were obtained.

An aspect ratio was calculated by the following equation.

The aspect ratio = the average fiber length/the average fiber diameter

(Amount of Carboxy Group)

The amount of the carboxy group was calculated using the following equation from the amount (a) of sodium hydroxide consumed in the neutralization stage of a weak acid in which a change in electrical conductivity is moderate by preparing 60 mL of a 0.5% by mass of a slurry (aqueous dispersion) of carboxylated cellulose, adding a 0.1 M aqueous hydrochloric acid solution to adjust the pH to 2.5, then dropping a 0.05 N aqueous sodium hydroxide solution to measure the electrical conductivity until the pH reaches 11.

The amount of the carboxy group [mmol/g carboxylated cellulose] = a [mL] × 0.05/the mass [g] of the carboxylated cellulose.

(Degree of Substitution with Carboxymethyl Group)

The degree of substitution with carboxymethyl group was measured by the following method.

About 2.0 g of a sample was precisely weighed and put into a 300 mL Erlenmeyer flask with a stopper. Into the Erlenmeyer flask, 100 mL of a solution obtained by adding 100 mL of special grade concentrated nitric acid to 1000 mL of methanol nitrate was added, and the mixture was shaken for 3 hours to convert a salt of carboxymethylated cellulose CNFs (CMC) into H-CMC (hydrogen-type carboxymethylated CNFs). 1.5 to 2.0 g of the absolute dry H-CMC was precisely weighed and put into a 300 mL Erlenmeyer flask with a stopper. The H-CMC was wetted with 15 mL of 80% methanol, 100 mL of 0.1N-NaOH was added thereto, and the mixture was shaken at room temperature for 3 hours. Excess NaOH was back-titrated with $0.1N-H_2SO_4$ using phenolphthalein as an indicator, and the degree of substitution with carboxymethyl group (DS value) was calculated by the following equation.

$$A = [(100 \times F' - 0.1N\text{-}H_2SO_4 \, (mL) \times F) \times 0.1]/(\text{the bone dry mass of H-CMC (g)})$$

The degree of substitution with carboxymethyl group = $0.162 \times A/(1 - 0.058 \times A)$

F': a factor of 0.1N-NaOH
F: a factor of $0.1N-H_2SO_4$

The degree of substitution with carboxymethyl group in the CNF of the carboxymethylated cellulose is usually the same as the degree of substitution with carboxymethyl group in the carboxymethylated cellulose before the conversion into the CNF.

(Crystallinity of Cellulose I Type)

The degree of crystallinity of cellulose I type of carboxymethylated cellulose nanofibers was measured by the following method.

The sample was placed on a glass cell and measured using an X-ray diffraction measuring apparatus (LabX XRD-6000, manufactured by Shimadzu Corporation). Calculation of the degree of crystallinity was performed using a method such as Segal, and the degree of crystallinity was calculated by the following equation from the diffraction intensity of a 002 plane at $2\theta = 22.6°$ and the diffraction intensity of an amorphous portion at $2\theta = 18.5°$ using the diffraction intensity at $2\theta = 10°$ to $50°$ of an X-ray diffraction diagram as a baseline.

$$Xc = (I002c - Ia)/I002c \times 100$$

Xc = The crystallinity of cellulose I type (%)
I002c: $2\theta = 22.6°$, the diffraction intensity of the 002 plane
Ia: $2\theta = 18.5°$, the diffraction intensity of the amorphous portion

The proportion of type I crystals in the carboxymethylated cellulose nanofibers is usually the same as that in the carboxymethylated cellulose before the conversion into the CNF.

(Amount of Phosphorus Oxoacid Group)

The amount of the phosphorus oxoacid group (the amount of the phosphate group or phosphorous acid group) was measured by the following method.

First, ion-exchanged water was added to a target CNF to prepare a slurry having a solid content concentration of 0.2% by mass. The obtained slurry was treated with an ion exchange resin, and then titration with an alkali was performed to measure the amount.

The treatment with the ion exchange resin was performed by adding 1/10 by volume of a strongly acidic ion exchange resin (Amberjet 1024; ORGANO CORPORATION, conditioned) to the CNF-containing slurry, performing shaking treatment for 1 hour, and then pouring the slurry onto a mesh having an opening of 90 $\mu$m to separate the resin and the slurry.

The titration using the alkali was performed by measuring a change in the pH value indicated by the slurry while adding 10 $\mu$L of a 0.1 N aqueous sodium hydroxide solution to the CNF-containing slurry after the treatment with the ion exchange resin every 5 seconds. The titration was performed while nitrogen gas was blown into the slurry from 15 minutes before the start of the titration. In this neutralization titration, in a curve obtained by plotting the measured pH with respect to the amount of the alkali added, two points at which the increment (differential value of the pH with respect to the amount of the alkali dropped) becomes maximum are observed. Out of these, the maximum point of the increment obtained first after the addition of the alkali is referred to as a first end point, and the maximum point of the increment obtained next is referred to as a second end point. The amount of the alkali required from the start of the titration to the first end point is equal to a first amount of dissociated acid in the slurry used for the titration. In addition, the amount of the alkali required from the start of the titration to the second end point is equal to the total amount of the dissociated acid in the slurry used for the titration. The value obtained by dividing the amount (mmol) of the alkali required from the start of the titration to the first end point by the solid content (g) in the slurry to be titrated was taken as the amount of the phosphorus oxoacid group (mmol/g).

(Water Content)

The water content in the powder was calculated as a difference between the mass (absolute dry mass) after drying of the obtained powder at 105°C for 3 hours or more and the mass before the drying.

(Particle Size)

The average particle size (D50) of a powder used in each of Examples and Comparative Examples is a particle size including 50% of a cumulative value from the minimum value in a volume-based particle diameter distribution, and a cumulative 10% diameter (D10) is a particle size including 10% of the cumulative value from the minimum value.
The particle size was measured under the condition of a particle refractive index of 1.5 using a laser diffraction/scattering type particle size distribution meter (Mastersizer 3000, manufactured by Spectris Co., Ltd.). In the measurement, a dry powder sample was directly put into the apparatus to perform the measurement.

(Angle of Repose)

The angle of repose of the powder obtained in each of Examples and Comparative Examples was defined as a value of the angle of repose (elevation angle) when the powder was dropped and deposited from a hole of a funnel onto a horizontal plate having a certain area until the powder had a certain shape to form a conical granular body using the powder property testing apparatus (Powder Tester PT-X type, manufactured by Hosokawa Micron Corporation).

(Angle of Fall)

Regarding the angle of fall of the powder obtained in each of Examples and Comparative Examples, the powder property testing apparatus (Powder Tester PT-X type, manufactured by Hosokawa Micron Corporation) is used to drop and deposit the powder from the hole of the funnel onto the horizontal plate having the certain area until the powder had a certain shape to form a conical granular body. Next, a certain impact was applied to the powder by dropping a weight having a certain weight on the same pedestal as the horizontal plate, and after a part of the powder naturally flowed and dropped from the horizontal plate, the elevation angle from a point on the outer periphery of the bottom surface to the apex of the cone for the remaining conical granular body was defined as the angle of fall.

(Angle of Difference)

Using the angle of repose and the angle of fall measured above, the angle of difference was obtained by the following equation.

The angle of difference = The angle of repose - the angle of fall

(Loose Bulk Density)

The loose bulk density of the powder obtained in each of Examples and Comparative Examples was measured using the powder property testing apparatus (Powder Tester PT-X type, manufactured by Hosokawa Micron Corporation). Specifically, a container having a constant volume was filled with a sample by natural dropping, and the sample was weighed to obtain the density.

(Packed Bulk Density)

The packed bulk density of the powder obtained in each of Examples and Comparative Examples was measured using the powder property testing apparatus (Powder Tester PT-X type, manufactured by Hosokawa Micron Corporation). Specifically, while performing tapping on a container having a constant volume, the sample was packed in a close-packed state and then weighed to obtain the density.

(Compressibility)

The compressibility of the powder obtained in each of Examples and Comparative Examples was obtained by the following equation.

The compressibility (%) = (the packed bulk density - the loose bulk density)/the packed bulk density $\times 100$

(Circularity)

The circularity of the powder obtained in each of Examples and Comparative Examples was measured using Morphologi G3 (manufactured by Marvern Panalytical Ltd.). Specifically, an image of the powder was acquired at a dispersion amount of $3mm^3$ and an objective magnification of 10 times, and the area circularity was obtained by image analysis. The numbers (N) measured were 257614 in Example 1 and 7106 in Comparative Example 1.

(Evaluation of Aggregating Properties)

For the powder obtained in each of Examples and Comparative Examples, aggregating properties were confirmed before and after packing. The sample was charged into a polyethylene bag, and then tapped and packed in a close-packed state. The polyethylene bag was pressed by hand and sealed while being degassed, and stored at a humidity of 80% and 40°C. One week after the storage, the powder was taken out from the bag, and the aggregating property was evaluated according to the following criteria.

A: No aggregation of the powder is present, and the powder is in a smooth state.
B: A state in which aggregation of the powder is slightly observed.

(Evaluation of Initial Water Absorbability)

The powder obtained in each of Examples and Comparative Examples was evaluated for water absorbability in a short time (initial water absorbability). On a flat glass plate, 0.1 g of a sample was placed flat. Thereafter, the water absorbability immediately after 1 mL of pure water was uniformly dropped on the sample using a dropper was evaluated according to the following criteria.

A: Water absorption into the powder immediately after the dropping was gentle, and a gel layer formed was small.
B: Immediately after the dropping, water absorption into the powder occurred, and a thick gel layer was formed.

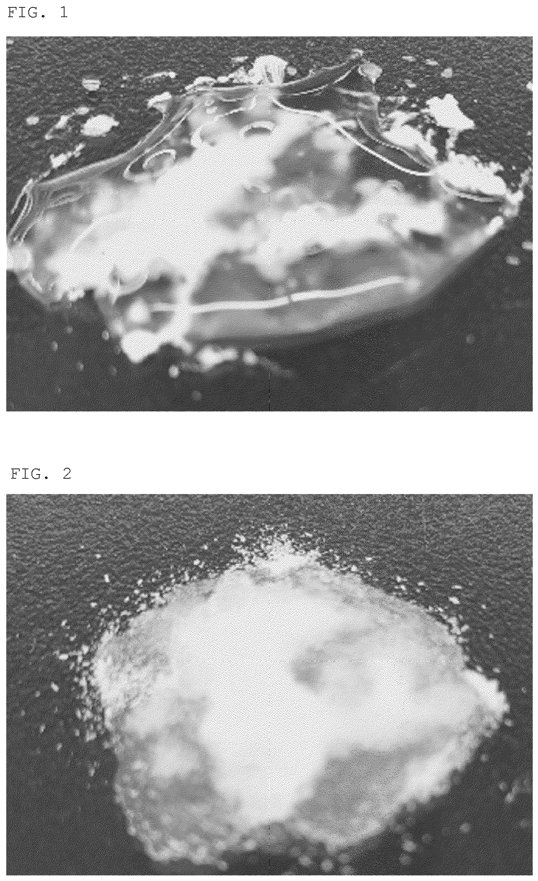

Note that, regarding the above criteria, an example of evaluation A is shown in Fig. 1 by a photograph and an example of evaluation B is shown in Fig. 2 by a photograph. In Fig. 1, it can be confirmed that most of water is not absorbed into the powder and is separated. On the other hand, in Fig. 2, a state in which water is absorbed by the powder and the powder swells can be confirmed.

(Preparation of Redispersion Liquid of Dry Powder)

In each of Examples and Comparative Examples, water was added to the obtained dry powder, and the mixture was stirred for 30 minutes using a homo disper to obtain a CNF redispersion liquid containing CNFs at a concentration of 1.0% by mass. Redispersion liquids were prepared under two conditions that rotation speeds during stirring were 1000 rpm (weak stirring) and 3000 rpm (strong stirring). The obtained 1.0% by mass of each redispersion liquid was used for the following evaluation of redispersibility.

(Evaluation of Redispersibility)

To each of the redispersion liquids containing CNFs at a concentration of 1.0% by mass obtained as described above, 2 droplets of Indian ink (manufactured by Kuretake Co., Ltd., solid content: 10%) were dropped, and the mixture was stirred for 1 minute with the scale of the rotation speed of a vortex mixer (the device name: Automatic Lab-mixer HM-10H, manufactured by IUCHI Corporation) set to the maximum. The liquid after stirring was sandwiched between two glass plates so as to have a film thickness of 0.15 mm, and observed at a magnification of 200 times using an optical microscope (Digital Microscope VHX-6000 manufactured by KEYENCE CORPORATION) to confirm the presence or absence of white particles (aggregate of CNFs). The redispersibility during weak stirring and strong stirring was evaluated according to the following criteria, and the results are shown in Table 1.

A: Almost no white particles are observed.
B: A small amount of very small white particles are observed.
C: Relatively large white particles are observed.

(pH of Redispersed Aqueous Dispersion)

The pHs of the redispersion liquids (rotation speed: 3000rpm) containing CNFs at a concentration of 1.0% by mass obtained as described above were measured, and the results are shown in Table **1.**

(Production Example 1)

(Production of Carboxylated CNF1)

500 g (absolute dry) of bleached dissolving kraft pulp (DKP manufactured by Buckeye Technologies, Inc.) derived from softwood was added to 50 L of an aqueous solution in which 7.8 g (0.05 mol) of TEMPO (Sigma-Aldrich Corporation) and 75.5 g (0.74 mol) of sodium bromide were dissolved, and the mixture was stirred until the pulp was uniformly dispersed. After 1.6 L of a 2M aqueous sodium hypochlorite solution was added to the reaction system, an oxidation reaction was started (oxidation treatment). The pH in the system decreased during the reaction, but a 3 M aqueous sodium hydroxide solution was sequentially added to adjust the pH to 10. After the reaction for 2 hours, the mixture was filtered through a glass filter and sufficiently washed with water to obtain carboxylated cellulose. This was adjusted to 5.0% (w/v) with water to prepare a slurry of the carboxylated cellulose, and hydrogen peroxide was added thereto at 2% (w/w) based on the carboxylated cellulose, and the pH was adjusted to 11.3 with 3 M sodium hydroxide. This slurry was left at a temperature of 80°C for 2 hours to perform hydrolysis. This was adjusted to 5.0% (w/v) with water and treated five times with an ultra-high pressure homogenizer (20°C, 140 MPa) to obtain a dispersion of carboxylated CNF1. The pH of the obtained dispersion (solid content concentration: 1%) was 7.5. The amount of the carboxyl group of the obtained carboxylated CNF1 was 1.7 mmol/g, the average fiber diameter was 3 nm, and the aspect ratio was 117.

(Production Example 2)

(Production of Carboxylated CNF2)

To 20 L of an aqueous solution in which TEMPO (Sigma-Aldrich Corporation) (0.025 mmol/g based on the cellulose raw material) and sodium bromide (1 mmol/g based on the cellulose raw material) were dissolved, 500 g (absolute dry) of bleached unbeaten kraft pulp (whiteness of 85%) derived from softwood was added, and the mixture was stirred until the pulp was uniformly dispersed. An aqueous sodium hypochlorite solution was added to the reaction system so as to be 5.2 mmol/g, and an oxidation reaction was started. The pH in the system decreased during the reaction, but a 3 M aqueous sodium hydroxide solution was sequentially added to adjust the pH to 10. The reaction was terminated when sodium hypochlorite was consumed and the pH in the system did not change. The mixture after the reaction was filtered through a glass filter to separate the pulp, and the pulp was sufficiently washed with water to obtain oxidized pulp (carboxylated cellulose). The pulp yield at this time was 90%, the time required for the oxidation reaction was 100 minutes, and the amount of the carboxy group was 1.4 mmol/g.

The oxidized pulp obtained in the above step was adjusted to 1.0% (w/v) with water, and treated three times with an ultra-high pressure homogenizer (20°C, 150 MPa) to obtain a dispersion of carboxylated CNF2. The obtained fibers had an average fiber diameter of 4 nm and an aspect ratio of 220.

(Production Example 3)

(Production of Carboxymethylated CNFs)

To a 5 L biaxial kneader having a rotation speed adjusted to 100 rpm, 500 parts of isopropanol (IPA) and a solution of 15 parts of sodium hydroxide in 200 parts of water were added, and 100 parts by dry mass of hardwood pulp (LBKP manufactured by NIPPON PAPER INDUSTRIES CO., LTD.) when dried at 100°C for 60 minutes were added. The mixture was stirred and mixed at 30°C for 90 minutes to prepare mercerized cellulose. While further stirring, 19 parts of sodium monochloroacetate dissolved in 20 parts of 90% IPA was added, and the mixture was stirred at 30°C for 30 minutes, then heated to 70°C, and subjected to carboxymethylation reaction at 70°C for 90 minutes. After completion of the reaction, the mixture was neutralized, washed with 65% hydrous methanol, dehydrated, dried, and pulverized to obtain a sodium salt of carboxymethylated cellulose having a degree of substitution with carboxymethyl group of 0.18 and a degree of crystallinity of cellulose I type of 64%. The method for measuring the degree of substitution with carboxymethyl group and the degree of crystallinity of cellulose I type is as described above.

The sodium salt of the carboxymethylated cellulose obtained in the above step was adjusted to 1.0% (w/v) with water, and treated three times with an ultra-high pressure homogenizer (20°C, 150 MPa) to obtain a dispersion of carboxymethylated CNFs. The obtained carboxymethylated CNFs had an average fiber diameter of 8 nm and an aspect ratio of 60.

(Production Example 4)

(Production of Phosphorylated CNFs)

A bleached unbeaten kraft pulp (whiteness of 85% and basis weight of 245 g/m$^2$ in the form of a sheet) derived from softwood was subjected to a treatment with phosphorus oxoacid as follows. First, a mixed aqueous solution of ammonium dihydrogen phosphate and urea was added to 100 parts by mass (bone dry) of the raw material pulp to adjust the amounts of ammonium dihydrogen phosphate, urea, and water to 45 parts by mass, 120 parts by mass and 150 parts by mass, respectively, thereby obtaining a chemical solution impregnated pulp. Next, the obtained chemical solution impregnated pulp was heated in a hot air dryer at 165°C for 250 seconds to introduce a phosphate group into the cellulose in the pulp, thereby obtaining a phosphorylated pulp. A pulp dispersion obtained by pouring 10 L of ion-exchanged water into 100 g (bone dry) of the obtained phosphorylated pulp was stirred such that the pulp was uniformly dispersed, and then an operation of filtering and dehydrating the pulp was repeated to wash the pulp dispersion. When the electrical conductivity of the filtrate reached 100 μS/cm or less, the washing was ended. Then, the washed phosphorylated pulp was diluted with 10 L of ion-exchanged water, and a 1 N aqueous sodium hydroxide solution was added little by little while stirring to obtain a phosphorylated pulp slurry having a pH greater than or equal to 12 and less than or equal to 13. The phosphorylated pulp slurry was dehydrated and washed to obtain a neutralized phosphorylated pulp.

The obtained phosphorylated pulp was subjected to infrared absorption spectrum measurement using FT-IR. As a result, absorption based on P=O of the phosphate group was observed around 1230 cm$^{-1}$, and it was confirmed that the phosphate group was added to the pulp. In addition, the obtained phosphorylated pulp was subjected to a test and analyzed by an X-ray diffractometer. As a result, typical peaks were confirmed at two positions in the vicinity of $2\theta = 14°$ or more and 17° or less and in the vicinity of $2\theta = 22°$ or more and 23° or less, and it was confirmed that the phosphorylated pulp had cellulose I type crystals.

The phosphorylated pulp obtained in the above step was adjusted to 1.0% (w/v) with water and treated three times with an ultra-high pressure homogenizer (20°C, 150 MPa) to obtain a dispersion of phosphorylated CNFs. The obtained fibers had an average fiber diameter of 4 nm and an aspect ratio of 200.

According to X-ray diffraction, it was confirmed that the obtained CNFs maintained cellulose type I crystals. The amount of the phosphate group (first amount of dissociated acid) was 1.45 mmol/g. The total amount of the dissociated acid was 2.45 mmol/g.

(Example 1)

(Production of Dried Product)

As anionically modified CNFs, 5.0% by mass of aqueous suspension (pH7.5) of the carboxylated CNF1 (the amount of the carboxy group: 1.7 mmol/g, the average fiber diameter: 3 nm, the aspect ratio: 117) obtained in Production Example 1 was prepared, and dried in a two-fluid nozzle type spray drying apparatus (OUDT-25 manufactured by OHKAWARA KAKOHKI CO., LTD.) at an inlet temperature of 160°C, an outlet temperature of 70°C, a dry air amount of 80 kg/h, and a liquid feeding amount of 54.2 kg/h to obtain a powdery CNF dried product.

The obtained dried product was classified and collected using a cyclone to obtain a powder of the anionically modified CNFs. The water content in the obtained powder was 4.4% by mass.

(Example 2)

(Production of Dried Product)

As anionically modified CNFs, the carboxymethylated CNFs (the degree of substitution with carboxymethyl group: 0.18, the average fiber diameter: 8 nm, the aspect ratio: 60) obtained in Production Example 3 were used. To 0.7% by mass of aqueous suspension of carboxymethylated CNFs, carboxymethyl cellulose (manufactured by NIPPON PAPER INDUSTRIES CO., LTD., the trade name: F350HC-4, viscosity (1% by mass, 25°C, 60 rpm) of about 3000 mPa·s, a degree of substitution with carboxymethyl group of about 0.90) was added in an amount of 40% by mass (that is, the solid content of carboxymethyl cellulose is 40 parts by mass when the solid content of carboxymethylated CNF is 100 parts by mass.) based on the amount of carboxymethylated CNFs, and the mixture was stirred with a TK homomixer (12,000 rpm) for 60 minutes to prepare an aqueous dispersion (solid content concentration of 1.0%) containing carboxymethylated CNFs as anionically modified CNFs. This aqueous dispersion was adjusted to a pH of 9.0 with a 5% aqueous solution of sodium hydroxide, then dried by a spray drying apparatus in the same manner as in Example 1, and classified and collected using a cyclone to obtain an anionically modified CNF-containing powder. The water content in the obtained powder was 8.2% by mass.

(Example 3)

Drying was performed in the same manner as in Example 1 by a spray drying apparatus except that the phosphorylated CNF (the amount of the phosphate group: 1.45 mmol/g, the average fiber diameter: 4 nm, the aspect ratio: 200) obtained in Production Example 4 was used as anionically modified CNFs, and the pH of the aqueous suspension was adjusted to 10.2 with a 5% aqueous sodium hydroxide solution before the drying, and classification and collection were performed using a cyclone to obtain a powder of the anionically modified CNFs. The water content in the obtained phosphorylated CNF powder was 8.5% by mass.

(Example 4)

As anionically modified CNFs, 5.0% by mass of aqueous suspension (pH7.5) of the carboxylated CNF1 (the amount of the carboxy group: 1.7 mmol/g, the average fiber diameter: 3 nm, the aspect ratio: 117) obtained in Production Example 1 was prepared, and the pH was adjusted to 11.0 using 5% sodium hydroxide. This aqueous suspension was dried with the two-fluid nozzle type spray drying apparatus (OUDT-25 manufactured by OHKAWARA KAKOHKI CO., LTD.) at an inlet temperature of 160°C, an outlet temperature of 70°C, a dry air amount of 80 kg/h, and a liquid feeding amount of 54.2 kg/h, and similarly classified and collected by a cyclone to obtain a powdery CNF dried product. The water content in the obtained powder was 6.4% by mass.

(Example 5)

A powdery CNF dried product was obtained in the same manner as in Example 4 except that 5% sodium hydrogen carbonate was used instead of 5% sodium hydroxide in order to adjust the pH, and the pH of the aqueous suspension before drying was set to 7.9. The water content in the obtained powder was 5.1% by mass.

(Comparative Example 1)

(Production of Dried Product)

As anionically modified CNFs, the carboxylated CNF2 (the amount of the carboxy group: 1.4 mmol/g, the average fiber diameter: 4 nm, the aspect ratio: 220) obtained in Production Example 2 was used. To 0.7% by mass of aqueous suspension of the carboxylated CNF2, carboxymethyl cellulose (the trade name: F350HC-4, viscosity (1%, 25°C) of about 3000 mPa·s, a degree of substitution with carboxymethyl group of about 0.9) in an amount of 40% by mass (that is, the solid content of carboxymethyl cellulose is 40 parts by mass when the solid content of the anionically modified CNFs is 100 parts by mass.) based on the anionically modified CNFs was added, and the mixture was stirred with a TK homomixer (12,000 rpm) for 60 minutes to prepare an aqueous dispersion containing the anionically modified CNFs. The pH of this dispersion was about 7 to 8. A 5% aqueous solution of sodium hydroxide was added to the aqueous dispersion to adjust the pH to 9.0, and then the mixture was applied to the surface of a drum of a drum dryer D0405 (manufactured by KATSURAGI INDUSTRY CO., LTD.) to form a thin film having a thickness of about 100 to 200 μm, and was dried at a drum surface temperature of 80°C, a dryer internal pressure of 2 kPa, and a drum rotation speed of 2 rpm to obtain a dried product containing the anionically modified CNFs having water content of 5% by mass.

The dried product containing the CNFs obtained as described above was pulverized using a hammer type mill (Hammer Mill TAP-3 manufactured by TOKYO ATOMIZER M.F.G. CO., LTD.) as a pulverizer to obtain a pulverized product. A particle size of the obtained pulverized product was adjusted by adjusting an outlet screen diameter of the pulverizer. The pulverized product after the particle size adjustment was collected using a cyclone to obtain a powder of the anionically modified CNFs. The water content in the obtained powder was 8% by mass.

(Comparative Example 2)

A pulverized product was obtained in the same manner as in Comparative Example 1 except that the dried product containing the CNFs obtained in Comparative Example 1 was pulverized using a turbo mill (manufactured by Freund Corporation) as a pulverizer. A particle size of the obtained pulverized product was adjusted by adjusting a gap between the rotor and a liner. The pulverized product after the particle size adjustment was collected using a cyclone to obtain an anionically modified CNF-containing powder. The water content in the obtained powder was 7.8% by mass.

[Table 1]

| | | Unit | Example 1 | Example 2 | Example 3 | Example 4 | Example 5 | Comp. Example 1 | Comp. Example 2 |
|---|---|---|---|---|---|---|---|---|---|
| CNF | Average fiber diameter | nm | 3 | 8 | 4 | 3 | 3 | 4 | 4 |
| | Water content | % by mass | 4.4 | 8.2 | 8.5 | 6.4 | 5.1 | 8.0 | 7.8 |
| | Average particle size (D50) | μm | 8.0 | 9.2 | 8.5 | 8.4 | 9.7 | 209 | 45 |
| | Cumulative 10% diameter (D10) | μm | 3.6 | 4.0 | 4.2 | 4.5 | 5.1 | 76 | 19.1 |
| Powder | Angle of repose | Degrees (°) | 50.4 | 49.7 | 51.3 | 45.2 | 47.8 | 43.0 | 44.3 |
| | Angle of fall | Degrees (°) | 24.6 | 22.1 | 25.2 | 24.0 | 25.6 | 21.7 | 21.7 |
| | Angle of difference | Degrees (°) | 25.8 | 27.6 | 26.1 | 21.2 | 22.2 | 21.3 | 22.6 |
| | Loose bulk density | $g/cm^3$ | 0.476 | 0.465 | 0.484 | 0.491 | 0.470 | 0.293 | 0.412 |
| | Packed bulk density | $g/cm^3$ | 0.836 | 0.820 | 0.831 | 0.841 | 0.847 | 0.447 | 0.677 |
| | Compressibility | % | 43.1 | 43.3 | 41.8 | 41.6 | 44.5 | 34.5 | 39.2 |
| | Circularity | - | 0.84 | 0.82 | 0.74 | 0.80 | 0.88 | 0.46 | 0.54 |
| Dispersion | pH adjustment alkali | | NaOH | NaOH | NaOH | NaOH | $NaHCO_3$ | NaOH | NaOH |
| | pH at time of drying | | 7.5 | 9.0 | 10.2 | 11.0 | 7.9 | 9.0 | 9.0 |
| | pH after redispersion | | 7.0 | 7.5 | 8.8 | 8.4 | 8.5 | 7.5 | 7.5 |
| Evaluation Results | Aggregating property | | A | A | A | A | A | B | B |
| | Initial water absorbability | | A | A | A | A | A | B | B |
| | Redispersibility at time of strong stirring | | A | A | A | A | A | A | A |
| | Redispersibility at time of weak stirring | | B | B | A | A | A | C | C |

As can be seen from Table 1, the powder containing the anionically modified cellulose nanofibers having an average fiber diameter of 3 nm to 500 nm in each of Examples 1 to 5 in which the water content was less than or equal to 20% by mass, the average particle size was less than 45 $\mu$m, and the cumulative 10% diameter (D10) in the volume-based particle diameter distribution was less than or equal to 10 $\mu$m had a high circularity, and aggregation due to adhesion of particles could be suppressed even when the power was compressed at the time of packing. Although the reason is not clear, it is presumed that one cause of aggregation is re-drying of a portion that has microscopically or locally absorbed moisture and gelled. It is considered that the cellulose nanofibers easily absorb water and absorb moisture because of hydrophilicity, but less likely to absorb moisture by adjusting the cellulose nanofibers to a specific particle size, and the cellulose nanofibers can reduce aggregation because of high circularity. In addition, the initial water absorbability was gentle, and excessive gel formation could be suppressed. This is considered to be because, for example, when the powder is used in each industry, the powder is hardly affected by moisture such as moisture or steam in the process or steam due to moisture evaporation from the powder itself, and adhesion of the gel to piping and a tank is suppressed. Further, both the loose bulk density and the packed bulk density were high, and the transfer efficiency was excellent and the transfer cost was low. On the other hand, the anionically modified cellulose nanofiber powders of Comparative Examples 1 and 2 that have a large average particle size and D10 had a low circularity, and aggregation occurred due to compression during packing. In addition, an excessive gel layer was formed due to rapid water absorption. In addition, both the loose bulk density and the packed bulk density were low, the transfer efficiency was low, the transfer cost was poor, and the redispersibility at the time of weak stirring was poor.

## Claims

1. A powder comprising an anionically modified cellulose nanofiber having an average fiber diameter of 3 nm to 500 nm, wherein the powder has

   a water content of less than or equal to 20% by mass,
   an average particle size of less than 45 $\mu$m, and
   a cumulative 10% diameter (D10) of less than or equal to 10 $\mu$m in a volume-based particle diameter distribution.

2. The powder comprising an anionically modified cellulose nanofiber according to claim 1, wherein the powder has an angle of repose of 40 to 55°.

3. The powder comprising an anionically modified cellulose nanofiber according to claim 1, wherein the powder has an angle of fall of 20 to 28°.

4. The powder comprising an anionically modified cellulose nanofiber according to claim 1, wherein the powder has an angle of difference of 20 to 30°.

5. The powder according to any one of claims 1 to 4, wherein the powder has a pH of greater than or equal to 8 when formed into a 1% aqueous dispersion.

FIG. 1

FIG. 2

## INTERNATIONAL SEARCH REPORT

| International application No. |
|---|
| **PCT/JP2024/005691** |

| A. | CLASSIFICATION OF SUBJECT MATTER |
|---|---|

*C08J 3/12*(2006.01)i; *C08B 15/04*(2006.01)i; *C08L 1/02*(2006.01)i
FI: C08J3/12 Z CEP; C08B15/04; C08L1/02

According to International Patent Classification (IPC) or to both national classification and IPC

| B. | FIELDS SEARCHED |
|---|---|

Minimum documentation searched (classification system followed by classification symbols)

C08J3/12; C08B1/00-37/18; C08L1/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2022-145947 A (NIPPON PAPER INDUSTRIES CO., LTD.) 04 October 2022 (2022-10-04)<br>entire text | 1-5 |
| A | JP 2018-016818 A (ASAHI KASEI KABUSHIKI KAISHA) 01 February 2018 (2018-02-01)<br>entire text | 1-5 |
| A | JP 2021-169577 A (ASAHI KASEI KABUSHIKI KAISHA) 28 October 2021 (2021-10-28)<br>entire text | 1-5 |
| A | JP 2021-169578 A (ASAHI KASEI KABUSHIKI KAISHA) 28 October 2021 (2021-10-28)<br>entire text | 1-5 |
| A | JP 2021-169579 A (ASAHI KASEI KABUSHIKI KAISHA) 28 October 2021 (2021-10-28)<br>entire text | 1-5 |

☑ Further documents are listed in the continuation of Box C.     ☑ See patent family annex.

| | |
|---|---|
| *   Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **12 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 692 174 A1**

## INTERNATIONAL SEARCH REPORT

International application No.

**PCT/JP2024/005691**

### C. DOCUMENTS CONSIDERED TO BE RELEVANT

| Category* | Citation of document, with indication, where appropriate, of the relevant passages | Relevant to claim No. |
|---|---|---|
| A | WO 2019/230716 A1 (NIPPON PAPER INDUSTRIES CO., LTD.) 05 December 2019 (2019-12-05) <br> entire text | 1-5 |
| A | WO 2020/059859 A1 (NIPPON PAPER INDUSTRIES CO., LTD.) 26 March 2020 (2020-03-26) <br> entire text | 1-5 |

Form PCT/ISA/210 (second sheet) (July 2022)

22

## INTERNATIONAL SEARCH REPORT
### Information on patent family members

International application No.

**PCT/JP2024/005691**

| Patent document cited in search report | | | Publication date (day/month/year) | Patent family member(s) | | | Publication date (day/month/year) |
|---|---|---|---|---|---|---|---|
| JP | 2022-145947 | A | 04 October 2022 | JP | 2019-206605 | A | |
| JP | 2018-016818 | A | 01 February 2018 | US | 2015/0150804 | A1 | |
| | | | | entire text | | | |
| | | | | WO | 2013/180248 | A1 | |
| | | | | IN | 10076DEN2014 | A | |
| JP | 2021-169577 | A | 28 October 2021 | (Family: none) | | | |
| JP | 2021-169578 | A | 28 October 2021 | (Family: none) | | | |
| JP | 2021-169579 | A | 28 October 2021 | (Family: none) | | | |
| WO | 2019/230716 | A1 | 05 December 2019 | US | 2021/0155717 | A1 | |
| | | | | entire text | | | |
| | | | | EP | 3805295 | A1 | |
| | | | | CN | 112204079 | A | |
| WO | 2020/059859 | A1 | 26 March 2020 | WO | 2020/059860 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019189318 A